(19) Europäisches Patentamt
European Patent Office
Office européen des brevets

(11) **EP 4 685 201 A1**

(12) **EUROPEAN PATENT APPLICATION**
published in accordance with Art. 153(4) EPC

(43) Date of publication:
**28.01.2026 Bulletin 2026/05**

(21) Application number: **24774693.6**

(22) Date of filing: **07.03.2024**

(51) International Patent Classification (IPC):
*C09D 175/04* (2006.01)  *B32B 27/40* (2006.01)
*C08G 18/00* (2006.01)  *C08G 18/08* (2006.01)
*C08G 18/65* (2006.01)  *C08G 18/76* (2006.01)
*C09D 5/00* (2006.01)  *C09D 5/02* (2006.01)

(52) Cooperative Patent Classification (CPC):
**B32B 27/40; C08G 18/00; C08G 18/08;
C08G 18/32; C08G 18/65; C08G 18/76; C09D 5/00;
C09D 5/02; C09D 175/04**

(86) International application number:
**PCT/JP2024/008635**

(87) International publication number:
**WO 2024/195554 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.03.2023 JP 2023047158**

(71) Applicant: **DKS Co. Ltd.
Kyoto-shi, Kyoto 600-8873 (JP)**

(72) Inventors:
• **MANO Hiroyuki
kyoto-shi, Kyoto 600-8873 (JP)**
• **HIROSE Masaharu
kyoto-shi, Kyoto 600-8873 (JP)**

(74) Representative: **Kuhnen & Wacker
Patent- und Rechtsanwaltsbüro PartG mbB
Prinz-Ludwig-Straße 40A
85354 Freising (DE)**

(54) **AQUEOUS POLYURETHANE DISPERSION FOR PRIMER, PRIMER LAYER, AND LAYERED PRODUCT**

(57)    Provided are a primer-forming aqueous polyurethane dispersion that can form a primer layer excellent in adhesion, warm water resistance, chemical resistance, and resistance to heat and humidity, a primer layer, and a laminate.

The present invention is a primer-forming aqueous polyurethane dispersion used for forming a primer layer on an amorphous resin substrate, the primer-forming aqueous polyurethane dispersion containing a polymer of a composition including an aromatic isocyanate, an alkylene oxide adduct of bisphenol A, a linear aliphatic polyol having 3 to 5 carbon atoms, a diol compound having a carboxyl group, and a polyol compound X having a number-average molecular weight of 500 to 3000.

**EP 4 685 201 A1**

**Description**

Technical Field

The present invention relates to a primer-forming aqueous polyurethane dispersion, a primer layer, and a laminate including the primer layer.

Background Art

Primer layers are disposed on the surfaces of optical films in some cases, so that adhesion between such an optical film and another substrate can be increased and properties of the surface of the optical film can be improved. For example, when a primer layer is disposed on the surface of an optical film, scratch resistance and mechanical strength of the optical film can be improved.

Coating agents for forming primer layers have been extensively studied and, among them, compositions containing resin emulsions are suitably used. For example, Patent Literature 1 discloses a technique in which an aqueous polyurethane resin dispersion composition containing a polyurethane obtained by a reaction of a polycarbonate polyol having an alicyclic structure, a polyisocyanate, an acidic group-containing polyol, and a hydroxyl group-containing polyamine is used to form a primer layer.

Citation List

Patent Literature

PTL 1: Japanese Unexamined Patent Application Publication No. 2022-050014

Summary of Invention

Technical Problem

However, primer layers formed using existing polyurethane resin dispersions do not necessarily satisfy all properties of adhesion to substrates (in particular, substrates formed of amorphous resins), warm water resistance, chemical resistance, and resistance to heat and humidity. Thus, for example, a problem in which penetration of moisture degrades adhesion under high humidity occurs in some cases; there is also a problem in which, for example, in the case of applying a coating composition containing an organic solvent onto a primer layer, the organic solvent contained in the coating composition causes collapse of the primer layer. From this viewpoint, there has been a demand for a coating agent that can form a primer layer excellent in all properties of adhesion, warm water resistance, chemical resistance, and resistance to heat and humidity.

The present invention has been made under such circumstances and an object of the present invention is to provide a primer-forming aqueous polyurethane dispersion that can form a primer layer excellent in adhesion to an amorphous resin substrate and can form such a primer layer that is also excellent in warm water resistance, chemical resistance, and resistance to heat and humidity; the primer layer, and a laminate.

Solution to Problem

In order to achieve the object, the inventors of the present invention performed thorough studies; as a result, they have found that use of a composition containing a specified isocyanate compound and a polyol compound can achieve the object, and they have accomplished the present invention.

Specifically, the present invention encompasses, for example, embodiments described in the following items.

Item 1

A primer-forming aqueous polyurethane dispersion used for forming a primer layer on an amorphous resin substrate, the primer-forming aqueous polyurethane dispersion containing a polymer of a composition including:

an aromatic isocyanate;
an alkylene oxide adduct of bisphenol A;
a linear aliphatic polyol having 3 to 5 carbon atoms;
a diol compound having a carboxyl group; and

a polyol compound X having a number-average molecular weight of 500 to 3000.

Item 2

The primer-forming aqueous polyurethane dispersion according to Item 1, wherein the polyol compound X is one or more selected from the group consisting of polyether polyols, polyester polyols, and polycarbonate polyols.

Item 3

The primer-forming aqueous polyurethane dispersion according to Item 1 or 2, wherein the diol compound having a carboxyl group includes dimethylolpropionic acid.

Item 4

The primer-forming aqueous polyurethane dispersion according to any one of Items 1 to 3, wherein the amorphous resin substrate is an optical film.

Item 5

A primer layer containing dry residue of the primer-forming aqueous polyurethane dispersion according to any one of Items 1 to 4.

Item 6

A laminate including the amorphous resin substrate and the primer layer according to claim 5.

Advantageous Effects of Invention

A primer-forming aqueous polyurethane dispersion according to the present invention can form a primer layer excellent in adhesion to an amorphous resin substrate and can form such a primer layer that is also excellent in warm water resistance, chemical resistance, and resistance to heat and humidity.

Description of Embodiments

Hereinafter, embodiments according to the present invention will be described in detail. Note that, in the present Description, expressions of "contain" and "include" encompass concepts of "contain", "include", "consist essentially of", and "consist of".

A primer-forming aqueous polyurethane dispersion according to the present invention is a primer-forming aqueous polyurethane dispersion used for forming a primer layer on an amorphous resin substrate, the primer-forming aqueous polyurethane dispersion containing a polymer of a composition including:

an aromatic isocyanate;
an alkylene oxide adduct of bisphenol A;
a linear aliphatic polyol having 3 to 5 carbon atoms;
a diol compound having a carboxyl group; and
a polyol compound X having a number-average molecular weight of 500 to 3000.

Hereinafter, a primer-forming aqueous polyurethane dispersion according to the present invention will be simply referred to as "aqueous polyurethane dispersion".

The aqueous polyurethane dispersion contains a polymer of the above-described composition, so that it can form a primer layer excellent in adhesion to an amorphous resin substrate and it can form such a primer layer that is also excellent in warm water resistance, chemical resistance, and resistance to heat and humidity.

(Aromatic isocyanate)

The aromatic isocyanate is an isocyanate compound that intramolecularly has at least one aromatic group and at least one isocyanate group. The aromatic isocyanate preferably has two or two or more isocyanate groups.

Examples of the aromatic isocyanate include a wide range of publicly known aromatic isocyanates for forming urethane resins. The aromatic isocyanate may be, for example, one or two or more of 2,4-tolylene diisocyanate (also referred to as TDI or 2,4-toluene diisocyanate), 2,2'-diphenylmethane diisocyanate, 2,4'-diphenylmethane diisocyanate, 4,4'-diphenylmethane diisocyanate (MDI), 4,4'-dibenzyl diisocyanate, 1,5-naphthylene diisocyanate, xylylene diisocyanate, 1,3-phenylene diisocyanate, 1,4-phenylene diisocyanate, and the like.

The aromatic isocyanate may be a mixture of two or more isomers. For example, when the aromatic isocyanate is 2,4-tolylene diisocyanate, its isomer, 2,6-tolylene diisocyanate may also be included in the aromatic isocyanate.

The aromatic isocyanate can be produced by a publicly known method or can also be obtained as a commercial product or the like.

(Alkylene oxide adduct of bisphenol A)

The alkylene oxide adduct of bisphenol A can be a compound having a structure in which the two hydroxyl groups of bisphenol A are substituted with alkylene oxide moieties. In other words, the alkylene oxide adduct of bisphenol A is a compound having at least two alkylene oxide moieties.

In the alkylene oxide adduct of bisphenol A, the alkylene oxide moieties preferably have two or more alkylene oxide units or have, for example, four or less alkylene oxide units.

In the alkylene oxide adduct of bisphenol A, the alkylene oxide may be, for example, ethylene oxide, propylene oxide, or butylene oxide, is preferably ethylene oxide or propylene oxide, preferably ethylene oxide. In other words, the alkylene oxide adduct of bisphenol A is preferably an ethylene oxide adduct or propylene oxide adduct of bisphenol A, particularly preferably an ethylene oxide adduct of bisphenol A.

The alkylene oxide adduct of bisphenol A can have a weight-average molecular weight of, for example, 100 to 1000. The weight-average molecular weight of the alkylene oxide adduct of bisphenol A is a value measured by GPC (gel permeation chromatography) and calculated using a calibration curve prepared with standard polystyrenes. The GPC conditions are, for example, column: "TSKgel GMHHR-H", manufactured by Tosoh Corporation, solvent: THF, flow rate: 0.6 mL/min, and measurement temperature: 40°C.

The hydroxyl value of the alkylene oxide adduct of bisphenol A is not particularly limited, can be, for example, 50 to 400 mgKOH/g, and is preferably 80 to 350 mgKOH/g, more preferably 100 to 300 mgKOH/g.

The hydroxyl value of the alkylene oxide adduct of bisphenol A is a value measured in accordance with Method A in JIS K1557-1:2007 and represents the number of milligrams of potassium hydroxide (KOH) that reacts with acetic acid that is consumed in acetylation of hydroxyl groups (OH groups) in 1 g of the polyol.

The alkylene oxide adduct of bisphenol A can be produced by a publicly known method or can also be obtained as a commercial product or the like. Examples of the commercial product of the alkylene oxide adduct of bisphenol A include NEWPOL (registered trademark), manufactured by Sanyo Chemical Industries, Ltd., specifically, NEWPOL BPE series and NEWPOL BP series.

In the composition, such alkylene oxide adducts of bisphenol A may be used alone or in combination of two or more thereof.

(Linear aliphatic polyol having 3 to 5 carbon atoms)

The linear aliphatic polyol having 3 to 5 carbon atoms (hereafter simply referred to as "linear aliphatic polyol") can be a compound intramolecularly having a linear alkyl group having 3 to 5 carbon atoms and having two or more hydroxyl groups. The linear aliphatic polyol preferably has two hydroxyl groups.

The linear aliphatic polyol preferably has a molecular weight (molar mass) of less than 500, more preferably 400 or less, still more preferably 300 or less, particularly preferably 200 or less.

Examples of the linear aliphatic polyol include ethylene glycol, 1,2-propanediol, 1,3-propanediol, 1,3-butanediol, 1,4-butanediol, and 1,5-pentanediol.

The linear aliphatic polyol can be produced by a publicly known method or can also be obtained as a commercial product or the like.

In the composition, such linear aliphatic polyols may be used alone or in combination of two or more thereof.

(Diol compound having carboxyl group)

The diol compound having a carboxyl group is a compound intramolecularly having at least one carboxyl group and two hydroxyl groups, preferably a compound having one carboxyl group and two hydroxyl groups.

The diol compound having a carboxyl group may be dimethylolacetic acid, dimethylolpropionic acid, dimethylolbutanoic acid, or the like. In particular, the diol compound having a carboxyl group preferably includes dimethylolpropionic acid. In this case, a polyurethane resin is easily generated, so that an aqueous polyurethane dispersion having high dispersion stability is easily produced and a primer layer excellent in adhesion, warm water resistance, chemical resistance, and resistance to heat and humidity tends to be formed. The diol compound having a carboxyl group may consist of dimethylolpropionic acid.

In the composition, such diol compounds having a carboxyl group may be used alone or in combination of two or more thereof.

(Polyol compound X having number-average molecular weight of 500 to 3000)

The polyol compound X having a number-average molecular weight of 500 to 3000 (500 or more and 3000 or less) (hereafter simply referred to as "compound X") is not particularly limited in terms of type and can be selected from a wide range of polyols.

The compound X is preferably one or more selected from the group consisting of polyether polyols, polyester polyols, and polycarbonate polyols. In this case, the aqueous polyurethane dispersion tends to provide a primer layer that is excellent in adhesion to an amorphous resin substrate and particularly has improved resistance to heat and humidity. In particular, the compound X is more preferably one or more selected from the group consisting of polyether polyols and polycarbonate polyols, particularly preferably a polyether polyol.

Such a polyether polyol is not particularly limited in terms of type as long as it has a number-average molecular weight of 500 to 3000. For example, the polyether polyol can be polyethylene glycol; other examples include polyhydric alcohols or derivatives thereof such as ethylene glycol, propylene glycol, propanediol, butanediol, pentanediol, 3-methyl-1,5-pentanediol, hexanediol, neopentyl glycol, diethylene glycol, triethylene glycol, tetraethylene glycol, dipropylene glycol, tripropylene glycol, 1,4-cyclohexanedimethanol, bisphenol A, bisphenol F, bisphenol S, hydrogenated bisphenol A, dibromobisphenol A, 1,4-cyclohexanedimethanol, dihydroxyethyl terephthalate, hydroquinone dihydroxyethyl ether, trimethylolpropane, glycerol, and pentaerythritol; and oxyalkylene derivatives such as ethylene oxide, propylene oxide, and butylene oxide.

The polyether polyol is preferably a polyethylene glycol having a number-average molecular weight of 500 to 3000. In this case, the aqueous polyurethane dispersion tends to provide a primer layer that is excellent in adhesion to an amorphous resin substrate and has particularly improved warm water resistance, chemical resistance, and resistance to heat and humidity.

Such a polyester polyol is not particularly limited in terms of type as long as it has a number-average molecular weight of 500 to 3000. For example, the polyester polyol may be a condensation product of a polycarboxylic acid and a polyhydric alcohol.

Examples of the polycarboxylic acid include dibasic acids such as oxalic acid, malonic acid, succinic acid, glutaric acid, adipic acid, pimelic acid, suberic acid, azelaic acid, sebacic acid, 1,12-dodecanedicarboxylic acid, phthalic anhydride, isophthalic acid, terephthalic acid, dimer acids, halogenated phthalic anhydride, tetrahydrophthalic acid, tetrahydrophthalic anhydride, hexahydrophthalic acid, hexahydrophthalic anhydride, hexahydroterephthalic acid, hexahydroisophthalic acid, 2,6-naphthalenedicarboxylic acid, 2,7-naphthalenedicarboxylic acid, 2,3-naphthalenedicarboxylic acid, 2,3-naphthalenedicarboxylic anhydride, 4,4'-biphenyldicarboxylic acid, and dialkyl esters of the foregoing, acid anhydrides corresponding to the foregoing, and polybasic acids such as pyromellitic acid. Such polycarboxylic acids can be used alone or in combination of two or more thereof. Examples of $\alpha,\beta$-unsaturated dibasic acids include maleic acid, maleic anhydride, fumaric acid, itaconic acid, and itaconic anhydride.

Examples of the polyhydric alcohol include dihydric alcohols such as ethylene glycol, 1,2-propylene glycol, 1,3-propylene glycol, 1,2-butanediol, 1,3-butanediol, 2-methyl-1,3-propanediol, 1,4-butanediol, neopentyl glycol, 1,5-pentanediol, 3-methyl-1,5-pentanediol, 1,6-hexanediol, 2-methyl-2-butyl-1,3-propanediol, 2,2,4-trimethyl-1,3-pentanediol, 2-ethyl-1,3-hexanediol, 2-methyl-1,8-octanediol, 1,9-nonanediol, 2,4-diethyl-1,5-pentanediol, 2-ethyl-2-butyl-1,3-propanediol, diethylene glycol, dipropylene glycol, and triethylene glycol, glycerol, trimethylolpropane, pentaerythritol, and sorbitol.

Such a polycarbonate polyol is not particularly limited in terms of type as long as it has a number-average molecular weight of 500 to 3000. The polycarbonate polyol may be, for example, a polycarbonate polyol obtained by a reaction between a polyol compound and a carbonate compound. Examples of the polyol compound include aliphatic polyols and alicyclic polyols. Examples of the carbonate compound include carbonates and carbonate derivatives such as phosgene.

The compound X has a number-average molecular weight of preferably 530 or more, more preferably 550 or more, still more preferably 580 or more, particularly preferably 600 or more. The compound X has a number-average molecular weight of preferably 2800 or less, more preferably 2500 or less, still more preferably 2300 or less, particularly preferably 2000 or less.

The number-average molecular weight (Mn) of the compound X is a value measured by GPC (gel permeation chromatography) and calculated using a calibration curve prepared with standard polystyrenes. The GPC conditions are, for example, column: "TSKgel GMHHR-H", manufactured by Tosoh Corporation, solvent: THF, flow rate: 0.6 mL/min, and measurement temperature: 40°C.

The hydroxyl value of the compound X is not particularly limited, can be, for example, 10 to 300 mgKOH/g, and is preferably 30 to 250 mgKOH/g, more preferably 50 to 200 mgKOH/g.

The hydroxyl value of the compound X is a value measured in accordance with Method A in JIS K1557-1:2007 and represents the number of milligrams of potassium hydroxide (KOH) that reacts with acetic acid that is consumed in acetylation of hydroxyl groups (OH groups) in 1 g of the polyol.

The compound X can be produced by a publicly known method or can also be obtained as a commercial product or the like.

In the composition, such compounds X may be used alone or in combination of two or more thereof.

(Composition)

The aqueous polyurethane dispersion contains, as described above, a polymer of a composition including an aromatic isocyanate, an alkylene oxide adduct of bisphenol A, a linear aliphatic polyol, a diol compound having a carboxyl group, and a compound X. Such a composition can contain another component as long as advantages of the present invention are not impaired. For example, the composition can contain an aromatic isocyanate such as an aliphatic isocyanate as long as advantages of the present invention are not impaired, and can also contain another polyol.

The composition, which contains the above-described components, can further contain a solvent. The solvent can be selected from, for example, a wide range of organic solvents generally used for synthesizing polyurethane and not having active hydrogen groups; examples include dioxane, methyl ethyl ketone, dimethylformamide, tetrahydrofuran, **N**-methyl-2-pyrrolidone, toluene, and propylene glycol monomethyl ether acetate.

When the composition contains a solvent, its content is not particularly limited and can be, for example, a solvent content employed in polymerization of publicly known polyurethane resins.

In the composition, the contents of components are not particularly limited. For example, in the composition, the content of the alkylene oxide adduct of bisphenol A may be defined as D mol and the content of the linear aliphatic polyol may be defined as G mol; in this case, the value of a molar ratio D/G is preferably 0.5 or more, more preferably 0.6 or more, still more preferably 1 or more, yet more preferably 2 or more, particularly preferably 3 or more, and is preferably 15 or less, more preferably 12 or less, still more preferably 10 or less, yet more preferably 8 or less, particularly preferably 7 or less.

In the composition, the content of the linear aliphatic polyol may be defined as G mol and the content of the diol compound having a carboxyl group may be defined as F mol; in this case, the value of a molar ratio G/F is preferably 0.1 or more, more preferably 0.2 or more, still more preferably 0.25 or more, yet more preferably 0.3 or more, particularly preferably 0.4 or more, and preferably 2.5 or less, more preferably 2 or less, still more preferably 1.5 or less, particularly preferably 1.2 or less.

In the composition, the content of the alkylene oxide adduct of bisphenol A may be defined as D mol and the content of the diol compound having a carboxyl group may be defined as F mol; in this case, the value of a molar ratio F/D is preferably 0.1 or more, more preferably 0.2 or more, still more preferably 0.25 or more, particularly preferably 0.3 or more, and preferably 2 or less, more preferably 1.5 or less, still more preferably 1.3 or less, particularly preferably 1 or less. When the value of F/D is in such a range, the aqueous polyurethane dispersion tends to have improved dispersion stability.

In the composition, the percentage of the compound X contained is not particularly limited. For example, the percentage of the compound X contained relative to the total amount of the alkylene oxide adduct of bisphenol A, the linear aliphatic polyol, the diol compound having a carboxyl group, and the compound X is preferably 0.1 to 30 mol%, more preferably 1 to 20 mol%, still more preferably 2 to 15 mol%, particularly preferably 3 to 10 mol%. In such cases, primer layers tend to have improved adhesion to amorphous resin substrates.

In the composition, the content of the aromatic isocyanate is not particularly limited; for example, in the composition, the content of the aromatic isocyanate may be defined as A mol and the total amount of the alkylene oxide adduct of bisphenol A, the linear aliphatic polyol, the diol compound having a carboxyl group, and the compound X may be defined as B mol; in this case, the value of a molar ratio A/B (i.e., NCO/OH) can be in the range of 0.5 to 2, preferably 0.8 to 1.5, more preferably 0.9 to 1.3.

(Aqueous polyurethane dispersion)

The aqueous polyurethane dispersion contains a polymer of the above-described composition. Stated another way, the aqueous polyurethane dispersion can be obtained by polymerizing a raw material containing the composition. Thus, the aqueous polyurethane dispersion can be produced using the composition.

The aqueous polyurethane dispersion can be prepared by, for example, causing the composition to react at a predetermined temperature to generate a polyurethane resin and then adding water and optionally a neutralizer. Hereinafter, an example of a method for preparing the aqueous polyurethane dispersion using the composition will be described.

First, to a raw material containing predetermined amounts of the alkylene oxide adduct of bisphenol A, the linear aliphatic polyol, the diol compound having a carboxyl group, and the compound X, a predetermined amount of the solvent is added; subsequently, the aromatic isocyanate is added so as to provide a predetermined NCO/OH value to prepare the composition. This composition is subjected to a polymerization reaction at a predetermined temperature to generate a polyurethane resin; subsequently, water and optionally a neutralizer are added to cause emulsification, to obtain an emulsion. The solvent is removed by an appropriate method from the emulsion, to obtain the aqueous polyurethane dispersion.

In the production of the aqueous polyurethane dispersion, in order to increase the molecular weight of polyurethane, a chain extender can be used. The chain extender is not particularly limited in terms of type, and can be selected from, for example, a wide range of publicly known chain extenders; the chain extender is, for example, a compound having a functional group having reactivity to a polyisocyanate compound, and specific examples include amine compounds, diol compounds, and water. Addition of the chain extender can be performed, for example, concurrently with the preparation of the emulsion or after the preparation of the emulsion, but is not limited thereto.

The temperature of the polymerization reaction is not particularly limited, can be set to, for example, a temperature similar to the temperatures of synthesis of publicly known polyurethane resins, specifically, 30 to 150°C, preferably 40 to 100°C.

Examples of the neutralizer include nonvolatile bases such as sodium hydroxide and potassium hydroxide, tertiary amines such as trimethylamine, triethylamine, dimethylethanolamine, methyldiethanolamine, and triethanolamine, and volatile bases such as ammonia. Note that the neutralization can be performed before the polymerization reaction, during the polymerization reaction, or after the polymerization reaction.

The aqueous polyurethane dispersion is a dispersion in which a polymer of the composition is dispersed in water, in other words, a dispersion in which a polyurethane resin is dispersed in water. The concentration of the solid content of the aqueous polyurethane dispersion is not particularly limited and can be appropriately set in accordance with the type of the primer layer to be formed. For example, the concentration of the solid content of the aqueous polyurethane dispersion is 1 to 50 mass%, preferably 5 to 30 mass%.

The aqueous polyurethane dispersion is a polymer of the composition and hence the polyurethane resin contained in the aqueous polyurethane dispersion is a polymer including a constitutional unit derived from the aromatic isocyanate, a constitutional unit derived from the alkylene oxide adduct of bisphenol A, a constitutional unit derived from the linear aliphatic polyol, a constitutional unit derived from the diol compound having a carboxyl group, and a constitutional unit derived from the compound X.

In the aqueous polyurethane dispersion, the average particle diameter of the polymer (polyurethane resin) is not particularly limited, and may be, for example, 0.01 to 50 $\mu$m, preferably 0.015 to 10 $\mu$m, more preferably 0.02 to 5 $\mu$m. The average particle diameter means the 50% cumulative value measured by the dynamic light scattering method.

The aqueous polyurethane dispersion has high dispersion stability, can form a primer layer excellent in adhesion to an amorphous resin substrate, can form such a primer layer that is also excellent in warm water resistance, chemical resistance, and resistance to heat and humidity, and is used for primer. Thus, the aqueous polyurethane dispersion is used for forming a primer layer on an amorphous resin substrate.

The amorphous resin substrate can be selected from a wide range of substrates formed of amorphous resins. For example, examples of the amorphous resin substrate include substrates formed of acrylic resins, substrates formed of polycarbonate resins, substrates formed of polyamide-based resins, substrates formed of polystyrene-based resins, substrates formed of amorphous olefin resins, and substrates formed of polyether-based resins. In particular, the amorphous resin substrate is preferably a substrate formed of an acrylic resin or a substrate formed of a polycarbonate resin. In this case, the aqueous polyurethane dispersion provides a primer layer excellent in adhesion.

The amorphous resin substrate can be, for example, a film and is, in particular, preferably an optical film. The optical film is not particularly limited in terms of thickness and form and can be selected from a wide range of publicly known optical films.

(Primer layer and laminate)

The aqueous polyurethane dispersion can be used to form a primer layer. For example, the aqueous polyurethane dispersion can be applied to the above-described amorphous resin substrate to form a coating film and the coating film is dried to thereby form a primer layer. Thus, the primer layer contains dry residue of the aqueous polyurethane dispersion. The dry residue of the aqueous polyurethane dispersion is obtained by, for example, removing volatile components such as water from the aqueous polyurethane dispersion.

The thickness of the primer layer is not particularly limited and can be, for example, a thickness similar to the thicknesses of publicly known primer layers.

The method for using the aqueous polyurethane dispersion to form a primer layer is also not particularly limited and can be selected from a wide range of publicly known methods for forming a primer layer.

The primer layer formed from the aqueous polyurethane dispersion, which is excellent in adhesion to the above-described amorphous resin substrate such as an optical film, can also improve the performance of the surface of the optical film. For example, the primer layer formed from the aqueous polyurethane dispersion can improve the warm water resistance, chemical resistance, and resistance to heat and humidity of the amorphous resin substrate (such as an optical film).

Thus, the aqueous polyurethane dispersion is suitable as a coating agent for forming a primer layer (or a primer composition) and, in particular, can be suitably used as a coating agent for an amorphous resin substrate (or a primer composition for an amorphous resin substrate). Such a coating agent can optionally contain publicly known additives such as an ultraviolet absorbent, an antioxidant, an anti-fading agent, and a pH adjusting agent, or the coating agent may consist of the aqueous polyurethane dispersion. The coating agent can have an aqueous polyurethane dispersion content of 50 mass% or more, preferably 70 mass% or more, more preferably 80 mass% or more, still more preferably 90 mass% or more.

A laminate including a primer layer formed from the aqueous polyurethane dispersion and the amorphous resin substrate can be widely used for, for example, various optical applications and are particularly suitable as, for example, members of display apparatuses such as liquid crystal displays and touch panels.

The invention encompassed in the present disclosure is defined so as to include any combinations of features (properties, structures, functions, and the like) described in the embodiments of the present disclosure. In other words, the present disclosure encompasses all embodiments of all possible combinations of features described in the present Description.

EXAMPLES

Hereinafter, the present invention will be more specifically described with reference to Examples; however, the present invention is not limited to the embodiments described in Examples.

(Raw materials)

Raw materials were appropriately selected from the following raw materials and aqueous polyurethane dispersions of Examples were produced.

<Aromatic isocyanate (A)>

Mixture composed of 80 mass% of 2,4-tolylene diisocyanate and 20 mass% of 2,6-tolylene diisocyanate (CORONATE T-80)

4,4'-Diphenylmethane diisocyanate (MDI)

<Alkylene oxide adduct (D) of bisphenol A>

- 4 mol Ethylene oxide adduct of bisphenol A ("NEWPOL BPE-40", manufactured by Sanyo Chemical Industries, Ltd., weight-average molecular weight: 400, hydroxyl value: 281 mgKOH/g)
- 2 mol Ethylene oxide adduct of bisphenol A ("NEWPOL BPE-20NK", manufactured by Sanyo Chemical Industries, Ltd.)
- 2 mol Propylene oxide adduct of bisphenol A ("BPX-11", manufactured by ADEKA CORPORATION)

<Linear aliphatic polyol (G)>

- 1,4-Butanediol (manufactured by Mitsubishi Chemical Corporation)
- 1,3-Propanediol
- 1,5-Pentanediol

<Diol compound (F) having carboxyl group>

- Dimethylolpropionic acid

<Compound X>

- Polyethylene glycol 1 (number-average molecular weight: 600, "PEG-600", manufactured by Sanyo Chemical Industries, Ltd.)
- Polyethylene glycol 2 (number-average molecular weight: 1000, "PEG-1000", manufactured by Sanyo Chemical Industries, Ltd.)
- Polyethylene glycol 3 (number-average molecular weight: 2000, "PEG-2000", manufactured by Sanyo Chemical Industries, Ltd.)
- Polyester polyol (number-average molecular weight: 2000, "P-2010", manufactured by KURARAY CO., LTD.)
- Polycarbonate polyol (number-average molecular weight: 1000, "T-5651", manufactured by Asahi Kasei Corporation)

(Example 1)

The raw materials were selected so as to satisfy formulation proportions (molar ratios) in Example 1 in the formulation table in Table 1, and an aqueous polyurethane dispersion was produced. Note that the cells of Formulation conditions in Table 1 describe molar ratios of the raw materials based on the aromatic isocyanate (A) (1 mol). First, to a four-necked flask equipped with a stirrer, a reflux condenser, a thermometer, and a nitrogen inlet tube, the 4 mol ethylene oxide adduct of bisphenol A, 1,4-butanediol, dimethylolpropionic acid, the polyethylene glycol 1 serving as the compound X, and methyl ethyl ketone were added and sufficiently stirred and dissolved to obtain a raw material. To this raw material, CORONATE T-80 was added to prepare a composition and the composition was subjected to a polymerization reaction at 75°C until the NCO content reached 1.20 mass%. Subsequently, triethylamine serving as a neutralizer and water were added and emulsification was caused to obtain an emulsion; subsequently, from this emulsion under heating and a reduced pressure, methyl ethyl ketone serving as the solvent was distilled off. This provided an aqueous polyurethane dispersion having a solid content of 25 mass%.

(Examples 2 to 17)

The same method as in Example 1 was performed except for changes to the raw materials and formulation amounts in Table 1, to obtain aqueous polyurethane dispersions.

(Comparative Examples 1 to 4)

The same method as in Example 1 was performed except for changes to the raw materials and formulation amounts in Table 1, to obtain aqueous polyurethane dispersions.

(Reference Example 1)

The same aqueous polyurethane dispersion as in Example 1 was prepared.

(Evaluation method)

<Adhesion to substrate>

The amorphous resin substrate employed was a polymethyl methacrylate film (PMMA film; Technolloy S000#75) or a polycarbonate (PC film; "ELMECH", manufactured by KANEKA CORPORATION). Such a substrate was degreased using isopropyl alcohol; subsequently, on the substrate, the aqueous polyurethane dispersion was applied with a bar coater such that the dry film thickness would be 10 μm to form a coating film. This coating film was dried at 80°C for 10 minutes, subsequently dried at 120°C for 10 minutes, and left overnight to thereby form a primer layer on the substrate. This primer layer was subjected to 100-grid cross-cut adhesion test (JIS-K5400), and the number of the remaining squares was measured and evaluated on the basis of the following evaluation criteria.

[Evaluation criteria]

A: No peeling was observed, indicating excellent adhesion to the substrate.
B: 80% or more of the squares remained, indicating good adhesion to the substrate.
C: less than 80% of the squares remained, indicating poor adhesion to the substrate.

<Formulation stability>

To 50 parts by mass of the aqueous polyurethane dispersion, 6 parts by mass of a carbodiimide-based crosslinking agent (product name: CARBODILITE V-02-L2, manufactured by Nisshinbo Chemical Inc.) was added to prepare a sample. This sample was stored at 20°C for 1 week; the viscosity was measured before and after the storage, and the change in viscosity was used to evaluate formulation stability. The viscosity was measured using a single-cylinder rotational viscometer (JIS Z-8803:2011) at 20°C and evaluated on the basis of the following evaluation criteria.

[Evaluation criteria]

A: The change in viscosity was less than 100 mPa·s, indicating good formulation stability (dispersion stability).
B: The change in viscosity was 100 mPa·s or more or gelation occurred after the storage, indicating poor formulation stability (dispersion stability).

<Warm water resistance>

The aqueous polyurethane dispersion was applied onto a substrate such that the dry thickness would be about 200 to 300 $\mu$m, dried at 40°C for 15 hours, subsequently dried at 80°C for 6 hours, and further dried at 120°C for 30 minutes to form a film. The substrate employed was a metal plate coated with TEFLON (registered trademark). From the film formed on the substrate, a 2 × 2 cm test piece was cut. The test piece was immersed in warm water at 40°C for 24 hours; the mass (W0) (g) of the test piece before the immersion and the mass (Wn) (g) of the test piece after the immersion were measured; the following formula (1)

$$\text{Mass increase rate (\%)} = \{(Wn\ (g) - W0\ (g))/W0\ (g)\} \times 100 \tag{1}$$

was used to calculate the mass increase rate (%) of the test piece, and evaluation was performed on the basis of the following evaluation criteria.

[Evaluation criteria]

A: The mass increase rate was 50% or less, indicating excellent warm water resistance.
B: The mass increase rate was more than 50% and 200% or less, indicating good warm water resistance.
C: The mass increase rate was more than 200%, indicating poor warm water resistance.

<Chemical resistance>

The aqueous polyurethane dispersion was applied onto a substrate such that the dry thickness would be about 200 to 300 $\mu$m, dried at 40°C for 15 hours, subsequently dried at 80°C for 6 hours, and further dried at 120°C for 30 minutes to form a film. The substrate employed was a metal plate coated with TEFLON (registered trademark). From the film formed on the substrate, a 2 × 2 cm test piece was cut. The test piece was immersed in a solvent mixture of ethyl acetate/toluene in 1:1 (mass ratio) or isopropyl alcohol at 40°C for 24 hours; the mass (W0) (g) of the test piece before the immersion and the mass (Wn) (g) of the test piece after the immersion were measured; the above-described formula (1) was used to calculate the mass increase rate (%) of the test piece, and evaluation was performed on the basis of the following evaluation criteria.

[Evaluation criteria]

A: The mass increase rate was 50% or less, indicating excellent chemical resistance.
B: The mass increase rate was more than 50% and 200% or less, indicating good chemical resistance.
C: The mass increase rate was more than 200%, indicating poor chemical resistance.

<Resistance to heat and humidity>

The amorphous resin substrate employed was the above-described PMMA film or PC film. Such a substrate was degreased using isopropyl alcohol; subsequently, on the substrate, the aqueous polyurethane dispersion was applied with a bar coater such that the dry film thickness would be 10 μm to form a coating film. This coating film was dried at 80°C for 10 minutes, subsequently dried at 120°C for 10 minutes, and left overnight to thereby form a primer layer on the substrate. This primer layer was stored under an environment at a temperature of 85°C and at a humidity of 85%RH for 1 week; subsequently, a 100-grid cross-cut adhesion test (JIS-K5400) was performed, and the number of the remaining squares was measured and evaluated on the basis of the following evaluation criteria.

[Evaluation criteria]

A: No peeling was observed, indicating excellent resistance to heat and humidity.
B: 80% or more of the squares remained, indicating good resistance to heat and humidity.
C: less than 80% of the squares remained, indicating poor resistance to heat and humidity.

Table 1 describes, for the aqueous polyurethane dispersions of Examples and Comparative Examples, the formulation conditions during production and evaluation results. Note that, in Formulation conditions in Table 1, the blank entries indicate that the corresponding raw materials are not used. In Table 1, "Type of substrate" indicates the types of the amorphous substrates used in the evaluations of Adhesion to substrate, Warm water resistance, Chemical resistance, and Resistance to heat and humidity. In Table 1, 4EO adduct, 2EO adduct, and 2PO adduct respectively mean the 4 mol ethylene oxide adduct of bisphenol A, the 2 mol ethylene oxide adduct of bisphenol A, and the 2 mol propylene oxide adduct of bisphenol A.
In Table 1, "(D)/(G)", "(G)/(F)", and "(F)/(D)" all represent molar ratios, specifically as follows.

(D)/(G): alkylene oxide adduct of bisphenol A/linear aliphatic polyol
(G)/(F): linear aliphatic polyol/diol compound having carboxyl group
(F)/(D): diol compound having carboxyl group/alkylene oxide adduct of bisphenol A

In Table 1, "NCO/OH" indicates the ratio of the number of moles of the aromatic isocyanate to the total number of moles of the alkylene oxide adduct of bisphenol A, the linear aliphatic polyol, the diol compound having a carboxyl group, and the compound X (in other words, the above-described value of A/B).
Table 1 describes, for Reference Example 1 in which the substrate employed was, instead of the PMMA film or the PC film, a PET (polyethylene terephthalate) film, evaluation results of adhesion to the substrate, warm water resistance, chemical resistance, and resistance to heat and humidity.
Table 1 has demonstrated that aqueous polyurethane dispersions obtained from compositions containing an aromatic isocyanate, an alkylene oxide adduct of bisphenol A, a linear aliphatic polyol having 3 to 5 carbon atoms, a diol compound having a carboxyl group, and the polyol compound X can form a primer layer excellent in adhesion to an amorphous resin substrate (amorphous optical film) and can form such a primer layer that is also excellent in warm water resistance, chemical resistance, and resistance to heat and humidity.

[Table 1]

| Category | Sub | Item | Ex 1 | Ex 2 | Ex 3 | Ex 4 | Ex 5 | Ex 6 | Ex 7 | Ex 8 | Ex 9 | Ex 10 | Ex 11 | Ex 12 | Ex 13 | Ex 14 | Ex 15 | Ex 16 | Ex 17 | Comp 1 | Comp 2 | Comp 3 | Comp 4 | Ref Ex 1 |
|---|---|---|---|---|---|---|---|---|---|---|---|---|---|---|---|---|---|---|---|---|---|---|---|---|
| Formulation conditions (molar ratio) | Aromatic isocyanate (A) | CORONATE T-80 | 1 | 1 | 1 | | 1 | 1 | 1 | 1 | 1 | 1 | 1 | 1 | 1 | 1 | 1 | 1 | 1 | 1 | 1 | 1 | 1 | 1 |
| | | 4,4'-Diphenylmethane diisocyanate | | | | 1 | | | | | | | | | | | | | | | | | | |
| | Alkylene oxide adduct (D) of bisphenol A | 4EO adduct | 0.53 | 0.53 | 0.53 | 0.53 | | | 0.305 | 0.656 | 0.245 | 0.6 | 0.53 | 0.455 | 0.565 | 0.53 | 0.53 | 0.53 | 0.53 | | 0.205 | 0.6 | 0.585 | 0.53 |
| | | 2EO adduct | | | | | 0.53 | | | | | | | | | | | | | | | | | |
| | | 2PO adduct | | | | | | 0.53 | | | | | | | | | | | | | | | | |
| | Linear aliphatic polyol (G) | 1,3-Propanediol | | 0.12 | | | | | | | | | | | | | | | | | | | | |
| | | 1,4-Butanediol | 0.12 | | | 0.12 | 0.12 | 0.12 | 0.12 | 0.12 | 0.4 | 0.05 | 0.12 | 0.05 | 0.12 | 0.12 | 0.12 | 0.12 | 0.12 | 0.65 | | 0.28 | 0.12 | 0.12 |
| | | 1,5-Pentanediol | | | 0.12 | | | | | | | | | | | | | | | | | | | |
| | Diol compound (F) having carboxyl group | Dimethylolpropionic acid | 0.23 | 0.23 | 0.23 | 0.23 | 0.23 | 0.23 | 0.45 | 0.1 | 0.23 | 0.23 | 0.23 | 0.23 | 0.23 | 0.23 | 0.23 | 0.23 | 0.23 | 0.23 | 0.45 | | 0.23 | 0.23 |
| | Compound X | Polyethylene glycol 1 (number-average molecular weight: 600) | 0.058 | 0.058 | 0.058 | 0.058 | 0.058 | 0.058 | 0.058 | 0.058 | 0.058 | 0.058 | 0.058 | 0.2 | 0.02 | | | | | 0.058 | 0.28 | 0.058 | | 0.058 |
| | | Polyethylene glycol 2 (number-average molecular weight: 1000) | | | | | | | | | | | | | | 0.058 | | | | | | | | |
| | | Polyethylene glycol 3 (number-average molecular weight: 2000) | | | | | | | | | | | | | | | 0.058 | | | | | | | |
| | | Polyester polyol (number-average molecular weight: 2000) | | | | | | | | | | | | | | | | 0.058 | | | | | | |
| | | Polycarbonate polyol (number-average molecular weight: 1000) | | | | | | | | | | | | | | | | | 0.058 | | | | | |
| | | NCO/OH (molar ratio) | 1.07 | 1.07 | 1.07 | 1.07 | 1.07 | 1.07 | 1.07 | 1.07 | 1.07 | 1.07 | 1.07 | 1.07 | 1.07 | 1.07 | 1.07 | 1.07 | 1.07 | 1.07 | 1.07 | 1.07 | 1.07 | 1.07 |
| | Ratio | (D)/(G) | 4.42 | 4.42 | 4.42 | 4.42 | 4.42 | 4.42 | 2.54 | 5.47 | 0.61 | 12.00 | 4.42 | 9.10 | 4.71 | 4.42 | 4.42 | 4.42 | 4.42 | 0.00 | - | 2.14 | 4.88 | 4.42 |
| | | (G)/(F) | 0.52 | 0.52 | 0.52 | 0.52 | 0.52 | 0.52 | 0.27 | 1.20 | 1.74 | 0.22 | 0.52 | 0.22 | 0.52 | 0.52 | 0.52 | 0.52 | 0.52 | 2.83 | 0.00 | - | 0.52 | 0.52 |
| | | (F)/(D) | 0.43 | 0.43 | 0.43 | 0.43 | 0.43 | 0.43 | 1.48 | 0.15 | 0.94 | 0.38 | 0.43 | 0.51 | 0.41 | 0.43 | 0.43 | 0.43 | 0.43 | - | 2.20 | 0.00 | 0.39 | 0.43 |
| Evaluation results | Evaluations | Type of substrate | PMMA | PMMA | PMMA | PMMA | PMMA | PMMA | PMMA | PMMA | PMMA | PMMA | PC | PMMA | PMMA | PMMA | PMMA | PMMA | PMMA | PMMA | PMMA | | PMMA | PET |
| | | Adhesion to substrate | A | A | A | A | A | A | A | A | B | A | A | A | B | A | A | A | A | C | A | | C | C |
| | | Formulation stability | A | A | A | A | A | A | A | B | A | A | A | A | A | A | A | A | A | A | A | | A | A |
| | | Warm water resistance | A | A | A | A | A | A | B | A | A | A | A | B | A | A | A | A | A | A | C | Synthesis failed | A | A |
| | | Chemical resistance (ethyl acetate/toluene) | A | A | A | A | A | A | B | A | A | B | A | B | A | A | A | A | A | A | C | | A | A |
| | | Chemical resistance (isopropyl alcohol) | A | A | A | A | A | A | B | A | A | B | A | B | A | A | A | A | A | A | C | | A | A |
| | | Resistance to heat and humidity | A | A | A | A | A | A | B | A | B | A | A | B | B | A | A | B | A | C | B | | C | C |

## Claims

1. A primer-forming aqueous polyurethane dispersion used for forming a primer layer on an amorphous resin substrate, the primer-forming aqueous polyurethane dispersion comprising a polymer of a composition comprising:

   an aromatic isocyanate;
   an alkylene oxide adduct of bisphenol A;
   a linear aliphatic polyol having 3 to 5 carbon atoms;
   a diol compound having a carboxyl group; and
   a polyol compound X having a number-average molecular weight of 500 to 3000.

2. The primer-forming aqueous polyurethane dispersion according to claim 1, wherein the polyol compound X is one or more selected from the group consisting of polyether polyols, polyester polyols, and polycarbonate polyols.

3. The primer-forming aqueous polyurethane dispersion according to claim 1, wherein the diol compound having a carboxyl group includes dimethylolpropionic acid.

4. The primer-forming aqueous polyurethane dispersion according to claim 1, wherein the amorphous resin substrate is an optical film.

5. A primer layer comprising dry residue of the primer-forming aqueous polyurethane dispersion according to any one of claims 1 to 4.

6. A laminate comprising the amorphous resin substrate and the primer layer according to claim 5.

## INTERNATIONAL SEARCH REPORT

| International application No. |
| --- |
| **PCT/JP2024/008635** |

**A.   CLASSIFICATION OF SUBJECT MATTER**

*C09D 175/04*(2006.01)i; *B32B 27/40*(2006.01)i; *C08G 18/00*(2006.01)i; *C08G 18/08*(2006.01)i; *C08G 18/65*(2006.01)i; *C08G 18/76*(2006.01)i; *C09D 5/00*(2006.01)i; *C09D 5/02*(2006.01)i

FI:   C09D175/04; C09D5/00 D; C09D5/02; B32B27/40; C08G18/00 C; C08G18/08 019; C08G18/65 011; C08G18/76

According to International Patent Classification (IPC) or to both national classification and IPC

**B.   FIELDS SEARCHED**

Minimum documentation searched (classification system followed by classification symbols)

C09D175/04; B32B27/40; C08G18/00; C08G18/08; C08G18/65; C08G18/76; C09D5/00; C09D5/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | WO 2021/065325 A1 (DKS CO., LTD.) 08 April 2021 (2021-04-08) whole document | 1-6 |
| A | WO 2015/019899 A1 (DIC CORPORATION) 12 February 2015 (2015-02-12) whole document | 1-6 |
| A | JP 2013-227520 A (DKS CO., LTD.) 07 November 2013 (2013-11-07) whole document | 1-6 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 April 2024** | **16 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/008635**

| Patent document cited in search report | | | Publication date (day/month/year) | Patent family member(s) | | | Publication date (day/month/year) |
|---|---|---|---|---|---|---|---|
| WO | 2021/065325 | A1 | 08 April 2021 | TW 202122513 A entire text | | | |
| WO | 2015/019899 | A1 | 12 February 2015 | US 2016/0177127 A1 entire text CN 105452380 A KR 10-2016-0030222 A TW 201510041 A | | | |
| JP | 2013-227520 | A | 07 November 2013 | KR 10-2013-0111451 A entire text CN 103360935 A TW 201402727 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022050014 A